# EUROPÄISCHE PATENTSCHRIFT

(11) **EP 2 473 726 B1**
(45) Veröffentlichungstag und Bekanntmachung des Hinweises auf die Patenterteilung: **25.05.2016**
(21) Anmeldenummer: 10744590.0
(22) Anmeldetag: 18.08.2010
(51) Int. Cl.: F02C 3/34, F02C 6/18, F02C 7/18

(54) **GASTURBOGRUPPE**
GAS TURBINE GROUP
GROUPE TURBINE À GAZ

(30) Priorität: 03.09.2009 CH 13692009
(43) Veröffentlichungstag der Anmeldung: 11.07.2012
(73) Patentinhaber: ALSTOM Technology Ltd, 5400 Baden (CH)
(72) Erfinder: WETTSTEIN, Hans, CH-8008 Zürich (CH)
(74) Vertreter: Bernotti, Andrea
(86) Internationale Anmeldenummer: PCT/EP2010/062026
(87) Internationale Veröffentlichungsnummer: WO 2011/026732

(56) Entgegenhaltungen:
- EP-A1- 0 022 349
- EP-A1- 0 516 995
- WO-A1-98/51917
- WO-A1-03/038244
- WO-A1-2004/042113
- DE-A1- 3 413 241
- JP-A- 2007 170 307
- US-B1- 6 389 793

## Beschreibung

### Technisches Gebiet

Die vorliegende Erfindung betrifft eine Gasturbogruppe gemäss Oberbegriff des Anspruchs 1. Sie betrifft auch ein Verfahren zum Betrieb einer solchen Gasturbogruppe.

### Stand der Technik

Im Zusammenhang mit der CO₂ Abscheidung beim Betrieb von fossil befeuerten Kraftwerken sind mittlerweile verschiedene Abgasrezirkulationssysteme bekannt geworden. Der Zweck solcher Systeme ist jeweils darin zu sehen, die Abscheidung von Schadstoffen wie CO₂ und NOx im an die Atmosphäre abzuführenden Abgas zu vereinfachen, indem eine erhöhte Schadstoff-Konzentration die Behandlung kleinerer Abgasmassenströme erlaubt. Bei diesen Systemen, wie sie beispielsweise in US2008104958A1 oder US 6,598,402 B2 beschrieben sind, wird ein Teil des Abgases mit Frischluft vermischt, abgekühlt und vom Kompressor wieder angesaugt, verdichtet und der Brennkammer als sauerstoffhaltiges Gas wieder zugeführt. Die Grenze hinsichtlich der möglichen Rezirkulationsrate wird erreicht, wenn der Sauerstoffanteil in der Gasturbinenbrennkammer ein zulässiges Minimum erreicht hat.

Eine weitere Gasturbogruppe gemäß dem Stand der Technik ist aus DE 3 413 241 bekannt.

Nun haben aber alle modernen Gasturbinen eine auf verschiedene Druck- und Temperaturniveaus erfolgende Kühlfluidversorgung für die Kühlung der thermisch belasteten Teile eben dieser Gasturbine. Die Kühlfluidversorgung wird nach dem Stand der Technik durch Entnahme komprimierter Luft aus dem Kompressor aufrecht erhalten. Somit strömt diese Luft an der Brennkammer vorbei. Damit wird ein erheblicher Anteil der kompressorseitig angesaugten Frischluft der Verbrennung in der Brennkammer entzogen. Dies führt zu einer Verkleinerung der möglichen Rezirkulationsrate. Eine solche Ausgangssituation lässt sich auch bei einer sequentiell gefeuerten Gasturbogruppe, wie sie beispielsweise in EP 0 620 362 B1 beschrieben ist, feststellen, bei welcher Anteile der kompressorseitig angesaugten Luft der Verbrennung der Hochdruck- und der Niederdruck-Brennkammer entzogen werden müssen. Die genannte Druckschrift bildet einen integrierenden Bestandteil dieser Beschreibung.

Ein weiterer Nachteil der bekannten Kühlfluidversorgungssysteme besteht darin, dass Ihr Druck für den ungünstigsten Fall ausgelegt werden muss, um in allen Betriebszuständen eine genügende Kühlfluidversorgung sicherzustellen. Gasturbinen mit solchen Kühlfluidsystemen fahren aber oft Betriebsweisen, bei welcher ein tieferer Kühlfluiddruck vollauf genügen würde. Dies beeinträchtigt den Wirkungsgrad.

Ein weiterer Nachteil der bestehenden Kühlfluidversorgungssysteme besteht darin, dass die gesamte vom Kompressor angesaugte Luft in einer Qualität (Staubfreiheit etc) gefiltert werden muss, wie es die Kühlsysteme mit ihren feinen Kanälen von weniger als einem Millimeter Durchmesser erfordern. Der grösste Teil der Luft würde aber diese Filterungsqualität und den damit inhärent verbundenen Druckverlust gar nicht erfordern.

### Darstellung der Erfindung

Hier will die Erfindung Abhilfe schaffen. Der Erfindung, wie sie in den Ansprüchen gekennzeichnet ist, liegt die Aufgabe zugrunde, bei einer Gasturbogruppe der eingangs genannten Art die obengenannten Nachteile zu beheben, und dafür zu sorgen, dass die mögliche Rezirkulationsrate maximiert und gleichzeitig der Druck der Kühlfluidversorgung dem aktuellen Betriebszustand der Gasturbine angepasst werden kann.

Dabei schlägt die Erfindung vor, dass die thermisch belasteten Teile der Gasturbogruppe durch Kühlfluide, beispielsweise durch Kühlluft, gekühlt werden, die teilweise oder ganz von einem separaten Kompressor, im folgenden auch Kühlfluidkompressor genannt, stammen, indem diese Kühlfluide in genügender Menge und mit dem erforderlichen Druck zur Verfügung stehen. Das in den Kühlfluidkompressor eintretende Fluid kann durch die separate Führung zu einer höheren Qualität gefiltert werden als der grössere Teil des Prozessfluids, welcher in den Hauptkompressor gesaugt wird. Das ermöglicht Einsparungen bei der Filterung und/oder eine höhere Kühfluidreinheit, wodurch noch kleinere Kühlkanäle in den Kühlsystemen möglich werden.

Erfindungsgemäss saugt der Kühlfluidkompressor Luft an, welche optional speziell gefiltert wird, eventuell gemischt mit gekühlten und gegebenenfalls behandelten Abgasen. Falls partieller Rezirkulationsbetrieb gefahren wird, kann der Kühlfluidkompressor bis zu 100% Abgase ansaugen, wobei die Brennkammer der Hauptmaschine immer noch mit 100% Luft betrieben wird und daher keine Modifikation im Vergleich zum rezirkulationslosen Betrieb erfordert. Wenn die Rezirkulationsrate weiter erhöht werden soll, kann optional weiteres Abgas der Ansaugluft des zur Gasturbogruppe gehörenden Hauptkompressors zugemischt werden, bis der minimal zulässige Sauerstoffgehalt in der Brennkammer erreicht wird. Der Grenzwert der möglichen Rezirkulationsrate kann dadurch erheblich gesteigert werden.

Bei Gasturbogruppen mit einer oder zwei Brennkammern (siehe beispielsweise EP 0 620 362 B1) kann eine Aufteilung der Kühlfluidversorgung ohne Weiteres zwischen Haupt- und Kühlfluidkompressor so erfolgen resp. vorgenommen werden, dass beispielsweise bei einem Schaden am Kühlfluidkompressor der Betrieb mit Teillast aufrechterhalten werden könnte.

Ein weiterer Vorteil der Erfindung ist darin zu sehen, dass für den Start der Gasturbogruppe mit einem separaten Kühlfluidkompressor zur Bereitstellung der erforderlichen Anwurfleistung verschiedene Optimierungsmöglichkeiten resp. Optionen bestehen. Diesbezüglich kann der Kühlfluidkompressor etwas später gestartet und anfänglich mit reduzierter Leistung gefahren werden. Seine volle Leistung wird erst bei Nennlastbetrieb benötigt, so dass daraus auch ein höherer Teillastwirkungsgrad erzielt werden kann.

Der Kühlfluidkompressor kann auch mit Entnahmen auf verschiedenen Druckstufen ausgerüstet werden, um die verschiedenen Druckstufen der Kühlsysteme zu bedienen. Eine noch flexiblere Anordnung wäre die Verwendung von optional regelbaren parallel betreibbaren Kompressoren zur Versorgung der verschiedenen Druckstufen mit dem jeweils passenden Kühlfluidzustand.

Ein weiterer auch wesentlicher Vorteil der Erfindung betrifft die Bereitstellung von Kühlfluiden, welche die sehr hohen Anforderungen an die Reinheit und Staubfreiheit erfüllen müssen. Eingedenk der Tatsache, dass das Kühlfluid durch sehr feine Kanäle strömen muss, deren Verstopfung grosse Schäden verursachen kann, behilft man sich bei konventioneller Bereitstellung der Kühlfluide damit, dass die gesamte Ansaugluft entsprechend gefiltert wird. Zu diesem Zweck muss man grosse Luftfilter verwenden, welche Druckverluste verursachen, was zu einer Wirkungsgradeinbusse führt. Mit einem oder mehreren separaten Kühlfluidkompressoren können deren Frischluftversorgung und gegebenenfalls das Rezirkulationsgas gezielt besser gefiltert werden als das in den Hauptkompressor eintretende Fluid. Allein durch die Reduktion des Filterdruckverlustes vor dem Hauptkompressor lässt sich der Gesamtwirkungsgrad einer typischen Gasturbine um etwa 0,1 Prozentpunkte verbessern.

Ein weiterer Vorteil der Erfindung ist darin zu sehen, dass bei Combined Cycles die Abwärme der verschiedenen Zwischenkühlungen des Kühlfluidkompressors leicht in den Dampfprozess eingekoppelt werden kann, was auch wieder eine Verbesserung des Wirkungsgrades mit sich bringt.

Ein weiterer Vorteil der Erfindung ist darin zu sehen, dass jede vom Kühlfluidkompressor abzweigende Kühlleitung zu den Brennkammern oder Turbinen mit Massnahmen ergänzt werden kann, welche dafür sorgen, dass bei einem Versagen des Kühlfluidkompressors automatisch eine redundante Kühlfluidversorgung erfolgt, zum Beispiel auch durch den Einsatz von Dampf. Wenn die Speisung des Kühlfluids durch den Hauptkompressor geschieht, ist das weniger gut möglich.

Soweit eine redundante Minimalkühlfluid-Versorgung ausserhalb der ordentlichen Kühlungsvorkehrungen sichergestellt ist, lässt sich der angestammte Betrieb der erfindungsgemässen Gasturbogruppe, insbesondere der sequentiell befeuerten Gasturbogruppe, auch bei einem Kühlfluiddruckabfall weiter aufrecht erhalten.

Was den Antrieb des Kühlfluidkompressors betrifft, so ist es wichtig, dass dies netzunabhängig erfolgt, was entweder durch direkte Koppelung mit der Gasturbinenwelle oder durch einen Elektromotor, welcher an die netzunabhängig Eigenversorgung des Gasturbinenkraftwerkes angeschlossen ist. Letzteres hat den zusätzlichen Vorteil, dass der oder die Kühlfluidkompressoren über einen Frequenzkonverter mit variabler Drehzahl betrieben werden kann. Damit kann die Fördermenge und Druck des Kühlfluides geregelt werden. Alternativ oder ergänzend können der oder die Kühlfluidkompressoren auch mit verstellbaren Leitreihen ausgerüstet werden. Das erlaubt die Regulierung von Fördermenge und Druck auch bei konstanter Drehzahl.

Soll eine bestehende Gasturbogruppe für den Betrieb mit einem separaten Kühlfluidkompressor ausgebaut werden, so ist zum Beispiel das Schluckvermögen der Brennkammer resp. der Brennkammern und der Turbinenbeschaufelungen entsprechend zu vergrössern, weil dann das bisher dem Hauptkompressor entnommene Kühlfluid durch den Hauptkanal strömt. In diesem Fall steigt die Gesamtleistung der Anlage entsprechend der erhöhten Ansaugluftmenge um 10-30%. Umgekehrt könnte die Anpassung auch erfolgen durch entsprechende Reduktion der Luftmengen im Hauptkompressor stromauf der nicht mehr benötigten Kühlfluidentnahmen. Im letzteren Fall ergäbe sich keine signifikante Leistungsänderung.

Am Beispiel einer von der Anmelderin vorgesehenen Gasturbogruppe mit sequentieller Befeuerung ergeben sich Verbesserungen in bezug auf:
- Gesamtleistung.
- Wirkungsgrad der Hauptmaschine infolge der verkleinerten Relativspiele.
- Wirkungsgrad des Kühlfluidkompressors durch die dem Betriebszustand anpassbare Reduktion des Druckverhältnisses und durch eine oder mehrere Zwischenkühlungen deren Abwärme zudem im Bottoming Cycle genutzt werden kann.
- Teillastwirkungsgrad der Gesamtanlage infolge der optimierbaren Kühlung
- Den optional implementierbaren High Fogging-Betrieb, welcher auf eine grössere Wasser-Einspritzmenge erweitert werden kann, da der Kühlfluidkompressor für eine Druckerhöhung jederzeit einstellbar ist.
- Die Möglichkeit, Kühlfluid einzusparen durch Auslegung der Kühlsysteme mit feineren Kanäle, was erst durch die bessere Filterung des Kühlfluids ermöglicht wird.
- Lebensdauer der gekühlten Teile im Heissgaspfad: Durch die Anpassbarkeit der von Druck und Menge des Kühlfluides kann bei Lastwechseln zwischen Teillast-und/oder Vollastzuständen die Metalltemperatur der Heissgasteile nahezu konstant gehalten werden. Dadurch werden Temperaturzyklen vermieden und die LCF-Lebensdauer dieser Teile wird erhöht.

Aus dem Obigen resultiert der Vorteil, dass eine Kombianlage, welche gemäss Erfindung mit einer solchen Gasturbogruppe und mit einem Kühlfluidkompressor in Wirkverbindung steht, eine absolute Spitzenstellung sowohl hinsichtlich der Leistung als auch des Wirkungsgrades im Nenn- und Teillastbereich einnehmen wird.

Die Kühlfluidversorgung einer Gasturbogruppe darf deren Verfügbarkeit nicht beeinträchtigen. Bei einer erfindungsgemässen Anordnung ist es daher angezeigt, den Kühlfluidkompressor besonders robust auszulegen, das heisst mit kleineren Gasbiegespannungen der Schaufeln als der Hauptkompressor. Solche Auslegungen sind erkennbar an relativ grossen Schaufelsehnen und relativ kleinen Schaufelzahlen pro Schaufelkranz.

Eine erfindungsgemässe Weiterbildung beim Betrieb mit höchstmöglicher Rezirkulationsrate, bei welchem wenig Restsauerstoff im Abgas vorhanden ist, kann zu Korrosionsproblemen der davon betroffenen heissen Teile führen. Hiergegen wird vorgeschlagen, eine Voroxidation dieser Teile im Herstellungs- und/oder Rekonditionierungsprozess durchzuführen, insbesondere bei Teilen, welche einer besonderen Belastung durch sauerstoffarmes Heissgas ausgesetzt sind, so beispielsweise bei Turbinenschaufeln, Wärmestausegmenten, Brennkammerliner, Brennerteilen, Sensoren, etc. Zusätzlich können auch periodisch oder nach Bedarf Betriebszyklen mit Frischluft (dh. ohne Abgasrezirkulation) eingeschaltet werden, durch welche die Oxydschichten im Heissgaspfad regeneriert werden.

Des Weiteren wird eine betriebliche Disposition vorgeschlagen, welche sich als vorteilhaft erweist: Für den Rezirkulationsluftanteil, der dem Hauptkompressor zugeführt wird, ist es zweckmässig, die Zumischung durch eine äussere Öffnung, beispielsweise durch einen Ringspalt, stromauf der Kompressorbeschaufelung vorzusehen. Der finale Zweck dieser Vorkehrung ist darin zu sehen, dass die eventuell noch vorhandenen "Bleeds" für das Kühlfluid nach aussen liegen, und daher einen höheren Anteil an Rezirkulationsgas abziehen können, als dies die Kernströmung allein bewerkstelligen könnte.

Die erfindungsgemässe Lösung fokussiert des Weiteren die betrieblichen Abläufe bei einem Schnellschluss der Gasturbogruppe, eingedenk der Tatsache, dass wir hier schaltungsmässig noch mit einem Kühlfluidkompressor operieren, welcher zwingend eingebunden werden muss. Zu diesem Zweck wird vorgeschlagen, die Drehzahl und oder die verstellbaren Leitreihen) des Kühlfluidkompressors parallel zu den Betriebsdaten (zB. Turbineneintrittstemperatur, Kompressordruck etc) der Gasturbogruppe so zu regeln, dass unnötige Wärmespannungen und zyklische Belastungen in den heissen Teilen verhindert werden.

Der vorgeschlagene Gasturbinenbetrieb mit separatem Kühfluidkompressor lässt sich besonders gut mit "High Fogging" betreiben. In diesem Fall ist der Druckaufbau im Axialkompressoren der Gasturbogruppe umso durchhängender, je mehr Wasser eingespritzt wird. Dadurch, kann der Druck in den dazwischenliegenden Kühlfluidentnahmen stark absinken. Bestehende Lösungen behelfen sich heute damit, die einspritzbare Wassermenge auf meistens etwa 1% der Ansaugluft zu beschränken. Der Vorteil der erfindungsgemässen Schaltung ist darin zu sehen, dass der separate Kühlfluidkompressor durch eine entsprechende Regulierung die zuvor durch den "High Fogging"-Betrieb entstandenen Druckunterschiede gut kompensieren kann. Von daher eignet sich die erfindungsgemässe Schaltung sehr gut, um einen "High Fogging"-Betrieb auch mit höheren Wassereinspritzmengen zu ermöglichen, was zu höheren Spitzenleistungen der Gasturbogruppe führt. Eine weitere Möglichkeit besteht darin, den Kühlfluidkompressor nach Bedarf auch selbst mit "High-Fogging" zu betreiben.

Vorteilhafte und zweckmässige Weiterbildungen und Ausführungsvarianten der erfindungsgemässen Aufgabenlösung sind in den weiteren Ansprüchen gekennzeichnet.

### Kurze Beschreibung der Zeichnung

Im folgenden wird anhand der Zeichnung ein Ausführungsbeispiel der Erfindung näher erläutert. Alle für das unmittelbare Verständnis der Erfindung nicht erforderlichen Elemente sind weggelassen worden. Die Strömungsrichtung der Medien ist mit Pfeilen angegeben. Es zeigt:

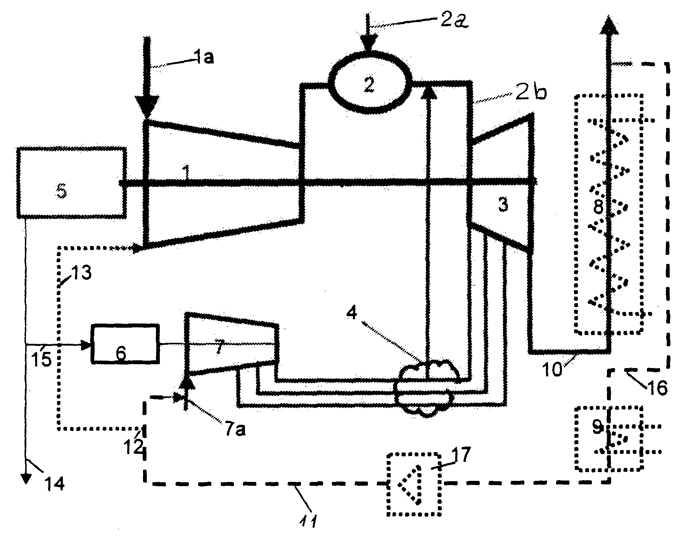

- Fig. 1: eine Schaltung einer Gasturbogruppe mit einem separaten Kühlfluidkompressor, mit optionalem HRSG und optionaler Abgasrezirkulation.

### Wege zur Ausführung der Erfindung, gewerbliche Anwendbarkeit

Die Fig. 1 zeigt eine Gasturbogruppe, welche mit einer einzigen Brennkammer 2 betrieben ist. Die Gasturbogruppe kann auch nach dem Prinzip der sequentiellen Verbrennung betrieben werden, wie sie aus EP 0 620 363 B1 hervorgeht. Diese Druckschrift bildet einen integralen Bestandteil dieser Patentanmeldung.
Die stromauf der Brennkammer nicht ersichtliche Bereitstellung des zum Betrieb der Brennkammer resp. der Brennkammern sowie von komplementären Wärmeerzeugern notwendigen Brennstoffes 2a kann beispielsweise durch eine mit der Gasturbogruppe zusammenwirkende Kohlevergasung bereitgestellt werden. Selbstverständlich ist es auch möglich, die zum Einsatz gelangende Brennstoffmenge aus einem Primärnetz (zum Beispiel Erdgas) zu beziehen. Wird die Versorgung eines gasförmigen Brennstoffes über eine Pipeline herangeführt, so kann das Potential aus der Druck- und/oder Temperaturdifferenz zwischen Primärnetz und Verbrauchernetz für die Belange der Gasturbogruppe, oder allgemein deren Schaltung, rekuperiert werden.

Die vorliegende Gasturbogruppe, welche mit einem HRSG 8 und einem Nachkühler/ Kondensator 9 erweitert ist, kann ohne Weiteres mit einem nachgeschalteten, in der Figur nicht ersichtlichen Dampfkreislauf zu einer sogenannten Kombianlage erweitert werden.

Die Gasturbogruppe als autonome Einheit besteht im wesentlichen aus einem Hauptkompressor 1, einer dem Hauptkompressor 1 nachgeschalteten Brennkammer 2, einer dieser Brennkammer 2 nachgeschalteten Turbine 3, und aus einem Generator 5. Die genannten Strömungsmaschinen 1, 3 weisen vorzugsweise eine gemeinsame Rotorwelle auf. Diese Rotorwelle ist vorzugsweise auf zwei Lagern gelagert, welche kopfseitig des Verdichters 1 und stromab der Turbine 3 angeordnet sind.
Sodann kann der Verdichter 1 mit einer nicht näher gezeigten Zwischenkühlung versehen werden.

Die angesaugte Luft 1 a strömt nach deren Verdichtung zu der Brennkammer 2. Die verdichtete Luft zu der Brennkammer 3 kann auch aus einer nicht gezeigten Druckluftspeicheranlage beigestellt werden.

Die Brennkammer 2 kann als Ringbrennkammer ausgebildet werden, und sie weist kopfseitig auf den Umfang verteilt, eine Anzahl von Brennern auf, welche die Heissgaserzeugung bewerkstelligen.

Eine markante Reduzierung resp. Minimierung der Schadstoff-Emissionen aus dieser Verbrennung, insbesondere was die NOx-Emissionen betrifft, lässt sich erzielen, indem Vormischbrenner eingesetzt werden, wie sie beispielsweise aus EP-0 321 809 A1 oder EP 0 704 657 A1 hervorgehen, wobei die in diesen Veröffentlichungen dargestellten Brenner und die später von der Anmelderin daraus abgeleiteten Weiterbildungen allesamt einen integrierenden Bestandteil dieser Anmeldung bilden.

Die Heissgase 2b aus der Brennkammer 2 beaufschlagen, wie bereits oben erwähnt, die unmittelbar nachgeschaltete Turbine 3. Wird eine Gasturbogruppe mit sequentieller Verbrennung eingesetzt, so wird innerhalb der ersten Turbine nur ein Teil des Überdruckes abgebaut. Die endgültige Entspannung wird hier bei der zweiten Turbine vorgenommen, nachdem die teilentspannten Heissgase aus der ersten Turbine einer erneuten kalorischen Aufbereitung in einer zweiten Brennkammer unterzogen worden sind. Für weitere Ausführungen in diesem Zusammenhang wird auf die Druckschrift EP 0 620 363 B1 verwiesen.

Bezogen auf die Fig. 1 dieser Anmeldung wird hervorgehoben, dass, insbesondere im Zusammenhang mit einer CO₂-Abscheidung, nach Stand der Technik bei Gasturbogruppen verschiedenartige Abgasrezirkulationssysteme vorgeschlagen werden. Statt vieler wird in diesem Zusammenhang auf die Druckschriften US 2008104958 A1 und US 6,598,402 B1 verwiesen.

Zur Vertiefung sei hier ausgeführt:

Der Zweck solcher Systeme ist darin zu sehen, die Abscheidung von Schadstoffen, insbesondere CO₂ und NOx, im an die Atmosphäre abzuführenden Abgase nachhaltig zu verbessern, indem auf Grund einer erhöhten Schadstoffkonzentration die entsprechende Behandlung kleinerer Abgasmassenströme möglich macht. Bei diesen Systemen wird ein Teil des Abgases mit Frischluft vermischt und vom Kompressor wieder angesaugt, verdichtet und der Brennkammer als sauerstoffhaltiges Gas wieder zugeführt. Die Grenze bei einer solchen Rezirkulationsrate wird erreicht, wenn der Sauerstoffgehalt in der Brennkammer der Gasturbogruppe ein zulässiges Minimum erreicht hat.

Nun weisen aber alle modernen Gasturbogruppen Kühlfluidversorgungen auf, welche auf verschiedenen Druck- und Temperaturniveaus die Kühlung der thermisch beanspruchten Teile vornehmen. Zu diesem Zweck wird verdichtete Luft aus dem Kompressor entnommen, wodurch diese Anteile an der Brennkammer vorbeiströmen.

Damit geht aber ein erheblicher Anteil des angesaugten Luftsauerstoffes an der Brennkammer vorbei und dieser Anteil wird demnach der Verbrennung entzogen. Damit lässt es sich nicht umgehen, dass eine Verkleinerung der möglichen Rezirkulationsrate die Folge ist.

Die Fig.1 zeigt nun diesbezüglich auf, welche erfindungsgemässen Vorkehrungen hier getroffen werden. Die Kühlfluide für die Kühlung der thermisch beanspruchten Teile einer Gasturbogruppe werden teilweise oder ganz in einem separaten Kompressor 7, im folgenden Kühlfluidkompressor genannt, der eine eigene Frischluftansaugung 7a aufweist, so dass diese auf die erforderlichen Drücke aufbereitet werden.
Wenn Rezirkulationsbetrieb gefahren wird, wird der Ansaugung des Kühlfluidkompressors Abgas 11 (16) beigemischt, wobei bis zu 100% Abgas angesaugt werden kann. Wenn noch mehr Abgas rezikuliert werden soll, kann der zusätzliche Anteil des Abgases 13 der Ansaugluft 1 a des Hauptkompressors 1 zugemischt werden, bis die minimal erforderliche Sauerstoffkonzentration in der Brennkammer 2 erreicht ist. In diesem Zustand ist die Rezirkulationsrate erheblich höher als dies nach dem bekannt gewordenen Stande der Technik möglich ist.

Der Kühlfluidkompressor 7 wird von der Gasturbine direkt über ein Getriebe oder indirekt über einen Generator 5 und optional über einen elektrischen Frequenzkonverter durch einen Elektromotor 6 angetrieben. Es ist von Vorteil, wenn der Kühlfluidkompressor 7 gut regulierbar ist, sei es durch Drehzahlvariation und/oder durch verstellbare Leitreihen. Durch eine solche Regelung kann der Teillastwirkungsgrad der Anlage verbessert werden, indem für die Kühlsysteme 4 nicht mehr Menge und Druck als benötigt erzeugt werden muss, dies im Gegensatz zu einer konventionellen Gasturbogruppe, bei welcher die Kühlfluidversorgung streng vom Hauptkompressor vorgegeben wird und demnach von diesem abhängig ist. Der Kühlfluidkompressor 7 kann auch zwischengekühlt sein, wodurch dessen parasitische Leistung vermindert wird. Dadurch wird der Systemwirkungsgrad weiter verbessert. Zudem wird Kühlfluid mit tieferer Temperatur bereitgestellt , was unter Umständen auch eine Reduktion des Kühlfluidmassenstromes ermöglicht.

Diese Trennung der Kühlfluidkompression kann auch bei einer sequentiell befeuerten Gasturbogruppe (siehe oben) auch zum Einsatz kommen, also unabhängig, ob die Gasturbogruppen mit einer oder mit zwei Brennkammern betrieben wird, der Hauptkompressor zwischengekühlt oder nicht, oder ob es sich um eine ein- oder mehrwellige Anlage handelt.

Eine besonders vorteilhafte Schaltung entsteht im Zusammenhang mit einer partiellen Abgasrezirkulation, welche von Fall zu Fall zugeschaltet werden kann. Dabei wird das Abgas 10 aus der Turbine 3 in einem Kessel 8 zunächst abgekühlt, anschliessend ein Teil davon in einen Rezirkulationszweig 16 eingeleitet. Der andere Teil des ursprünglichen Abgases 10 wird ausgeblasen oder einer nicht näher gezeigten CO₂-Abscheidungsanlage und/oder einer NOx-Reduktionsanlage zugeführt, Der rezirkulierte Abgasstrom 16 wird in einem intermediär vorgesehenen Nachkühler/Kondensator 9 weiter gekühlt, bevor dieser Gasstrom in den Kühlfluidkompressor 7 geleitet wird, oder mit der dort angesaugten Luft 7a vermischt wird. Soll eine noch grössere Rezirkulationsrate erzielt werden, so wird mindestens ein Teil des rezirkulierten Abgasstromes 16 vor dem Kühlfluidkompressor 7 abgezeigt und über eine Leitung 13 der Frischluftansaugung 1a des Hauptkompressors 1 zugemischt. Der Kessel 8 kann ohne Weiteres als HRSG/Dampfkessel zur Erzeugung einer Dampfmenge für den Betrieb einer nachgeschalteten Dampfturbine ausgelegt werden. Falls der Kühlfluidkompressor 7 elektrisch angetrieben wird, so ist es wichtig, dass dies netzunabhängig erfolgt, d.h., dass der Motor 6 an einem vom Generator 5 der Gasturbogruppe gespiesenen internen Netz angeschlossen wird, wobei die äussere Netzverbindung 14 ausserhalb dieser Verknüpfung 15 erfolgt.

Nebst dem Hauptkompressor 1 kann auch der Kühlfluidkompressor 7 mit "High Fogging" betrieben werden. Bei einem "High Fogging"-Betrieb eines Axialkompressors ist der Druckaufbau allgemein umso durchhängend, je mehr Wasser eingesprüht wird. Da der Druck in den zwischenliegenden Kühlfluidentnahmen dann zu tief werden kann, wird hiergegen Abhilfe geschaffen, indem die einspritzbare Wassermenge auf meistens etwa 1% der Ansaugluftmenge beschränkt wird. Hier greift die Erfindung ein, indem durch den separaten Kühlfluidkompressor 7 eine regulierende Kompensation stattfindet, wodurch der High Fogging Betrieb mit grösseren eingespritzten Wassermengen erfolgen kann, was dann zu höheren Spitzenleistungen führt.

In der Rezirkulationsleitung 13 wird zweckmässigerweise ein nicht näher gezeigtes Abschlussorgan vorgesehen, das mit einer Drosselfunktion versehen ist. Damit kann der Sauerstoffgehalt in der Brennkammer 2 geregelt werden. Bei ganz geschlossener Klappe erhält die Brennkammer reine Frischluft. Intermediäre Drosselstellung lassen sich somit von Fall zu Fall vornehmen, was die Betriebsweise der Brennkammer und der weiteren Schaltung ungemein flexibel gestaltet. Die Rezirkulation kann auch mit einem Fan 17 kontrolliert werden. Falls die Gasturbogruppe mit Rezirkulation nur in den Kühlfluidkompressor gefahren wird, kann auf diesen Fall verzichtet werden, weil der Kühlfluidkompressor dessen Förderdruck übernehmen kann.

Der Nachkühler/Kondensator 9 kann nach Bedarf so betrieben werden, dass die Temperatur des Rezirkulationsgases 16 unter Umgebungslufttemperatur abgesenkt werden kann. Damit wird die Leistungsaufnahme des Kühlfluidkompressors 7 reduziert. An sich kann dieser Kühlfluidkompressor 7 seinerseits über eine oder mehrere Zwischenkühlungen verfügen, welche seine Leistungsaufnahme weiter reduzieren.

Aus Fig. 1 ist der Bottoming Cycle hier nur durch den HRSG/Dampfkessel 8 dargestellt. Es ist klar, dass hierzu die üblichen Teile und Aggregate eines Combined Cycle dazu gehören können.

Eine Flue Gas Rezirkulation (FRG) und eine CO₂-Abscheidung kann auch eingeführt werden, indem das ganze rezirkulierte Gas durch den Kühlfluidkompressor 7 geht. Damit sind an der Brennkammer 2 keine entsprechenden Anpassungen mehr nötig. In einem solchen Fall kann die Anlage als sogenannte "capture ready" kommerzialisiert werden. Wenn aber einen höheren Rezirkulationsgrad angestrebt wird, kann ein Teil des gekühlten Abgases 11 über eine sich stromauf des Kühlfluidkompressors 7 befindliche Abzweigung 12 und weiter über eine Leitung 13 den Hauptkompressor 1 zugeleitet werden und dort mit der angesaugten Frischluft 1 a vermischt werden. Wenn nun die Verbrennungstechnologie in der Brennkammer 2 einer Modifizierung unterworfen wird, kann mit dem separaten Kühlfluidkompressor 7 ein höherer Rezirkulationsgrad erzielt werden als mit den bisherigen bekannt gewordenen Lösungen, da ein Sauerstoffbypass durch die Kühlsysteme 4 zur Kühlung der thermisch belasteten Teile der Gasturbogruppe entfällt.

In einem weiteren Extremfall kann der Massenstromanteil des Kühlfluidkompressors soweit vergrössert werden, dass die Brennkammer nahstöchiometrisch betrieben wird. Das in diesem Fall möglicherweise nicht für die Kühlung benötigte Fluid kann zwischen Brennkammer und Turbine zugemischt werden. Diese Lösung kann besonders bei Brennstoffen mit niedrigem Heizwert (z.B sogenanntes LBTU- oder MBTU-Gas) den Vorteil haben, dass die maximale Abgasrezirkulation nur in den Kühlfluidkompressor erfolgt, und dass daher keinerlei Beeinflussung der Verbrennung erfolgt.

### Bezugszeichenliste

- 1: Kompressor (Hauptkompressor)
- 1a: Ansaugluft
- 2: Brennkammer
- 2a: Brennstoff
- 2b: Heissgase
- 3: Turbine
- 4: Kühlsysteme versorgende Leitungen
- 5: Generator
- 6: Elektromotor
- 7: Kühlfluidkompressor
- 7a: Frischluftansaugung
- 8: Optionaler HRSG
- 9: Optionaler Nachkühler/Kondensator
- 10: Abgas aus der Turbine 7
- 11: Gekühltes Abgas
- 12: Abzweigung
- 13: Abgas, Rezirkulationsleitung
- 14: Aeussere Netzverbindung
- 15: Strom-Versorgung
- 16: Optionaler Rezirkulationszweig, rezirkulierter Abgasstrom
- 17: Optionaler Fan im Rezirkulationspfad

## Patentansprüche

1. Gasturbogruppe, im wesentlichen bestehend aus einer aus mindestens einem Verdichter (1) bestehenden Verdichtereinheit, aus mindestens einem Generator (5), aus mindestens einer Brennkammer (2) und aus mindestens einer Turbine (3), wobei die Abgase (10) aus der Turbine einer weiteren thermischen Nutzung (8) zuführbar sind, **dadurch gekennzeichnet, dass** die Gasturbogruppe mit mindestens einem separaten Kühlfluidkompressor (7) ausgestattet ist, dass dieser Kühlfluidkompressor mit Frischluft (7a) und mit einem Anteil (11) eines rückgeführten Abgases versorgbar ist, und dass die im Kühlfluidkompressor verdichteten Fluide der Kühlung von thermisch belasteten Teilen zuführbar sind.

2. Gasturbogruppe nach Anspruch 1, **dadurch gekennzeichnet, dass** mindestens ein Kühlfluidkompressor eine Massestromregulierung aufweist.

3. Gasturbogruppe nach Anspruch 2, **dadurch gekennzeichnet, dass** eine Ansaugmassestromregulierung mindestens eines Kühlfluidkompressors entweder mit mindestens einer verstellbaren Leitreihe oder mit verstellbarer Drehzahl oder mit beidem erfolgt.

4. Gasturbogruppe nach einem oder mehreren der Ansprüche 1-3, **dadurch gekennzeichnet, dass** die Filterung des Kühlfluids feiner ist als diejenige des Fluides, welches in den Hauptkompressor eintritt.

5. Gasturbogruppe nach Anspruch 4, **dadurch gekennzeichnet, dass** das in den Hauptkompressor eintretende Fluid nicht gefiltert wird.

6. Gasturbogruppe nach Anspruch 4, **dadurch gekennzeichnet, dass** der Filter für das in den Hauptkompressor eintretende Fluid einem Druckabfall unter 8 Millibar aufweist.

7. Gasturbogruppe nach einem oder mehreren der Ansprüche 4 bis 6, **dadurch gekennzeichnet, dass** die Kühlsysteme Kanäle oder Kühlfilmlöcher mit unter 0.6 mm lichter Weite aufweisen.

8. Gasturbogruppe nach Anspruch 1, **dadurch gekennzeichnet, dass** stromab der Verdichtereinheit eine erste Brennkammer angeordnet ist, dass stromab dieser ersten Brennkammer eine erste Turbine wirkt, dass stromab dieser ersten Turbine eine zweite Brennkammer angeordnet ist, dass stromab dieser zweiten Brennkammer eine zweite Turbine wirkt, und dass die genannten Strömungsmaschinen in thermodynamischer Wirkverbindung zueinander stehen.

9. Gasturbogruppe nach einem oder mehreren der Ansprüche 1 bis 8, **dadurch gekennzeichnet, dass** ihre Abgase einen Abhitzedampferzeuger durchströmen.

10. Gasturbogruppe nach Anspruch 1 und 9, **dadurch gekennzeichnet, dass** das rückgeführte Abgas abströmungsseitig des Abhitzedampferzeugers entnehmbar ist.

11. Gasturbogruppe nach Anspruch 10, **dadurch gekennzeichnet, dass** das rückgeführte Abgas einen stromauf der Kompressoren angeordneten Nachkühler/Kondensatordurchströmt.

12. Gasturbogruppe nach einem oder mehreren der Ansprüche 1-11, **dadurch gekennzeichnet, dass** in der Rezirkulationsleitung 16 des rückgeführten Abgases ein Fan eingebaut ist.

13. Gasturbogruppe nach Anspruch 12, **dadurch gekennzeichnet, dass** mit dem Fan die Rezirkulationsrate des rückgeführten Abgases regelbar ist.

14. Gasturbogruppe nach einem oder mehreren der Ansprüche 1-13, **dadurch gekennzeichnet, dass** von dem Kühlfluidkompressor 7 mindestens eine Kühlfluidleitung zu den zu kühlenden thermisch belasteten Teilen des Gasturbogruppe abzweigt.

15. Gasturbogruppe nach Anspruch 1, **dadurch gekennzeichnet, dass** die zu kühlenden Teile der Gasturbine Teile der Brennkammer und/oder der Turbine sind.

16. Gasturbogruppe nach Anspruch 1, **dadurch gekennzeichnet, dass** mindestens eine Kühlfluidleitung mit einem Abschlussorgan ausgestattet ist.

17. Gasturbogruppe nach Anspruch 16, **dadurch gekennzeichnet, dass** das Abschlussorgan ein Rückschlagventil ist.

18. Gasturbogruppe nach einem oder mehreren der Ansprüche 1-17, **dadurch gekennzeichnet, dass** von dem Kühlfluidkompressor mehrere Kühlfluidleitungen zu den zu kühlenden thermisch belasteten Teilen des Gasturbogruppe abzweigen.

19. Gasturbogruppe nach Anspruch 18, **dadurch gekennzeichnet, dass** die Kühlfluidleitungen verschiedene Drücke aufweisen.

20. Gasturbogruppe nach einem oder mehreren der Ansprüche 1-19, **dadurch gekennzeichnet, dass** mindestens ein Kühlfluidkompressor 7 mindestens eine Zwischenkühlung aufweist.

21. Gasturbogruppe nach den Anspruch 20, **dadurch gekennzeichnet, dass** der Massenstrom des Kühlfluidkompressors entsprechend seiner reduzierten Austrittstemperatur reduzierbar ist.

22. Gasturbogruppe nach einem oder mehreren der Ansprüche 1-21, **dadurch gekennzeichnet, dass** der Kühlfluidkompressor von einer Welle der Gasturbogruppe direkt oder über ein Getriebe angetrieben ist.

23. Gasturbogruppe nach Anspruch 1, **dadurch gekennzeichnet, dass** der Kühlfluidkompressor durch einen Elektromotor in Wirkverbindung mit dem Generator der Gasturbogruppe angetrieben ist, derart, dass die Stromversorgung auch bei Ausfall der äusseren Netzverbindung bestehen bleibt.

24. Gasturbogruppe nach den Ansprüchen 1 und 11, **dadurch gekennzeichnet, dass** stromab des Nachkühlers und stromauf des Kühlfluidkompressors ein Teil des rückgeführten Abgases zum Hauptkompressor abzweigt.

25. Gasturbogruppe nach einem oder mehreren der Ansprüche 1-24, **dadurch gekennzeichnet, dass** mehrere Kühlfluidkompressoren vorgesehen sind, welche sequentiell oder parallel betreibbar sind.

26. Gasturbogruppe nach Anspruch 8, **dadurch gekennzeichnet, dass** die zweite Brennkammer als selbstzündende Brennkammer betreibbar ist.

27. Gasturbogruppe nach Anspruch 8, **dadurch gekennzeichnet, dass** die Strömungsmaschinen auf einer gemeinsamen Rotorwelle angeordnet sind.

28. Gasturbogruppe nach einem oder mehreren der Ansprüche 1-27, **dadurch gekennzeichnet, dass** die Verdichtereinheit und/oder der Kühlfluidkompressor im High-Fogging-Betrieb betreibbar sind.

29. Gasturbogruppe nach Anspruch 28, **dadurch gekennzeichnet, dass** High-Fogging-Betrieb mit mindestens 0.5% Wassermenge der Ansaugluftmenge betreibbar ist.

30. Verfahren zum Betrieb einer Gasturbogruppe nach einem oder mehreren der Ansprüche 1-29, **dadurch gekennzeichnet, dass** alle oder einzelne Teile, welche dem Heissgas stromab des Brenners ausgesetzt sind, bei der Herstellung durch Voroxidation behandelt werden.

31. Verfahren zum Betrieb einer Gasturbogruppe nach einem oder mehreren der Ansprüche 1-30, **dadurch gekennzeichnet, dass** der Rezirkulationsbetrieb periodisch durch Phasen mit Frischluftbetrieb unterbrochen wird, welche die Oxydschichten der heissen Teile regenerieren.

32. Verfahren zum Betrieb einer Gasturbogruppe nach einem oder mehreren der Ansprüche 1-31, **dadurch gekennzeichnet, dass** ein Teil der Kühlfluide aus dem Hauptkompressor bezogen werden, derart, dass ein Teilastbetrieb der Gasturbogruppe auch bei Ausfall des Kühlfluidkompressors aufrecht erhalten bleibt.

33. Verfahren zum Betrieb einer Gasturbogruppe nach einem oder mehreren der Ansprüche 1-32, **dadurch gekennzeichnet, dass** die Abwärme von mindestens einem Zwischenkühler des oder der Kühlfluidkompressoren in den Bottoming Cycle eingekoppelt wird.

34. Verfahren zum Betrieb einer Gasturbogruppe nach einem oder mehreren der Ansprüche 1-33, **dadurch gekennzeichnet, dass** bei Versagen von einem Kühlfluidkompressor automatisch Einspritzung von einem Ersatzkühlmittel erfolgt, wobei der defekte Kompressor durch ein Rückschlagventil abgetrennt wird.

35. Verfahren zum Betrieb einer Gasturbogruppe nach einem oder mehreren der Ansprüche 1-34, **dadurch gekennzeichnet, dass** der Kühlfluidkompressor mit signifikant geringeren Gasbiegespannungen der Schaufeln ausgelegt werden als der Hauptkompressor.

36. Verfahren zum Betrieb einer Gasturbogruppe nach einem oder mehreren der Ansprüche 1-35, **dadurch gekennzeichnet, dass** die Kühlfluidkompressoren derart geregelt sind, dass die mit dem Kühlfluid gekühlten Teile in weiten Lastbereichen auf einer nahezu konstanten Metalltemperatur gehalten werden, und dass insbesondere bei einem Schnellschluss der Hauptmaschine eine schockartige Abkühlung vermieden wird.

37. Verfahren zum Betrieb einer Gasturbogruppe nach einem oder mehreren der Ansprüche 1-35, **dadurch gekennzeichnet, dass** der Massenstromanteil des Kühlfluidkompressors grösser ist als für die Kühlung benötigt und dass der nicht für die Kühlung benötigte Anteil des Kühlfluides zwischen Brennkammer und Turbine in den Hauptprozess strömt.

38. Verfahren zum Betrieb einer Gasturbogruppe nach einem oder mehreren der Ansprüche 1-37, **dadurch gekennzeichnet, dass** mindestens eine Brennkammer mit einem Brennstoff mit kleinem Heizwert nahstöchiometrisch betrieben wird.

## Claims

1. Gas turbine assembly, substantially comprising a compressor unit consisting of at least one compressor (1), at least one generator (5), at least one combustion chamber (2) and at least one turbine (3), wherein the exhaust gases (10) from the turbine can be supplied to a further thermal use (8), **characterised in that** the gas turbine assembly is equipped with at least one separate cooling fluid compressor (7), that this cooling fluid compressor can be supplied with fresh air (7a) and with a proportion (11) of a recirculated exhaust gas, and that the fluid compressed in the cooling fluid compressor can be supplied for cooling thermally loaded components.

2. Gas turbine assembly according to claim 1, **characterised in that** at least one cooling fluid compressor has a mass flow regulation.

3. Gas turbine assembly according to claim 2, **characterised in that** an intake mass flow regulation of at least one cooling fluid compressor takes place either with at least one adjustable vane row or with adjustable rotation speed or with both.

4. Gas turbine assembly according to one or more of claims 1 - 3, **characterised in that** the filtration of the cooling fluid is finer than that of the fluid which enters the main compressor.

5. Gas turbine assembly according to claim 4, **characterised in that** the fluid entering the main compressor is not filtered.

6. Gas turbine assembly according to claim 4, **characterised in that** the filter for the fluid entering the main compressor shows a pressure drop of less than 8 millibar.

7. Gas turbine assembly according to one or more of claims 4 to 6, **characterised in that** the cooling systems comprise channels or cooling film holes with a clear width of less than 0.6 mm.

8. Gas turbine assembly according to claim 1, **characterised in that** a first combustion chamber is arranged downstream of the compressor unit, that a first turbine acts downstream of this first combustion chamber, that a second combustion chamber is arranged downstream of this first turbine, that a second turbine acts downstream of the second combustion chamber, and that said turbomachines are thermodynamically actively connected to each other.

9. Gas turbine assembly according to one or more of claims 1 to 8, **characterised in that** its exhaust gases flow through a waste heat steam generator.

10. Gas turbine assembly according to claims 1 and 9, **characterised in that** the recirculated exhaust gas can be extracted on the downstream side of the waste heat steam generator.

11. Gas turbine assembly according to claim 10, **characterised in that** the recirculated exhaust gas flows through an aftercooler/condenser arranged upstream of the compressors.

12. Gas turbine assembly according to one or more of claims 1-11, **characterised in that** a fan is installed in the recirculation line (16) of the recirculated exhaust gas.

13. Gas turbine assembly according to claim 12, **characterised in that** the recirculation rate of the recirculated exhaust gas can be regulated with the fan.

14. Gas turbine assembly according to one or more of claims 1-13, **characterised in that** at least one cooling fluid line branches from the cooling fluid compressor 7 to the thermally loaded parts of the gas turbine assembly to be cooled.

15. Gas turbine assembly according to claim 1, **characterised in that** the parts of the gas turbine to be cooled are parts of the combustion chamber and/or the turbines.

16. Gas turbine assembly according to claim 1, **characterised in that** at least one cooling fluid line is equipped with a shut-off element.

17. Gas turbine assembly according to claim 16, **characterised in that** the shut-off element is a non-return valve.

18. Gas turbine assembly according to one or more of claims 1-17, **characterised in that** a plurality of cooling fluid lines branch from the cooling fluid compressor to the thermally loaded parts of the gas turbine assembly to be cooled.

19. Gas turbine assembly according to claim 18, **characterised in that** the cooling fluid lines have different pressures.

20. Gas turbine assembly according to one or more of claims 1-19, **characterised in that** at least one cooling compressor (7) has at least one intermediate cooling.

21. Gas turbine assembly according to claim 20, **characterised in that** the mass flow of the cooling fluid compressor can be reduced according to its reduced outlet temperature.

22. Gas turbine assembly according to one or more of claims 1-21, **characterised in that** the cooling fluid compressor is driven by a shaft of the gas turbine assembly either directly or via a gear mechanism.

23. Gas turbine assembly according to claim 1, **characterised in that** the cooling fluid compressor is driven by an electric motor actively connected to the generator of the gas turbine group, such that the power supply is sustained even on failure of the external network connection.

24. Gas turbine assembly according to claims 1 and 11, **characterised in that** a part of the recirculated exhaust gas branches to the main compressor downstream of the aftercooler and upstream of the cooling fluid compressor.

25. Gas turbine assembly according to one or more of claims 1-24, **characterised in that** several cooling fluid compressors are provided which can be operated sequentially or in parallel.

26. Gas turbine assembly according to claim 8, **characterised in that** the second combustion chamber can be operated as a self-igniting combustion chamber.

27. Gas turbine assembly according to claim 8, **characterised in that** the turbomachines are arranged on a common rotor shaft.

28. Gas turbine assembly according to one or more of claims 1-27, **characterised in that** the compressor unit and/or the cooling fluid compressor can be operated in high-fogging mode.

29. Gas turbine assembly according to claim 28, **characterised in that** high-fogging mode can be operated with at least 0.5% water quantity relative to the intake air quantity.

30. Method for operating a gas turbine assembly according to one or more of claims 1-29, **characterised in that** all or individual parts exposed to the hot gas downstream of the burner are treated by pre-oxidation in production.

31. Method for operating a gas turbine assembly according to one or more of claims 1-30, **characterised in that** the recirculation operation is periodically interrupted by phases with fresh air operation, which regenerates the oxide layers of the hot components.

32. Method for operating a gas turbine assembly according to one or more of claims 1-31, **characterised in that** a part of the cooling fluid is extracted from the main compressor, such that a part-load operation of the gas turbine assembly is sustained even on failure of the cooling fluid compressor.

33. Method for operating a gas turbine assembly according to one or more of claims 1-32, **characterised in that** the waste heat from at least one intermediate cooler of the cooling fluid compressor or compressors is coupled into the bottoming cycle.

34. Method for operating a gas turbine assembly according to one or more of claims 1-33, **characterised in that** on failure of a cooling fluid compressor, a substitute coolant is automatically injected, wherein the faulty compressor is isolated by a non-return valve.

35. Method for operating a gas turbine assembly according to one or more of claims 1-34, **characterised in that** the cooling fluid compressor is designed with significantly lower gas bending stresses of the vanes than the main compressor.

36. Method for operating a gas turbine assembly according to one or more of claims 1-35, **characterised in that** the cooling fluid compressors are regulated such that the parts cooled with the cooling fluid are held at an almost constant metal temperature within wide load ranges, and that in particular on fast closure of the main machine, shock-like cooling is avoided.

37. Method for operating a gas turbine assembly according to one or more of claims 1-35, **characterised in that** the mass flow proportion of the cooling fluid compressor is greater than that required for the cooling, and that the proportion of the cooling flow not required for the cooling flows into the main process between the combustion chamber and the turbine.

38. Method for operating a gas turbine assembly according to one or more of claims 1-37, **characterised in that** at least one combustion chamber is operated almost stoichiometrically with a fuel with low calorific value.

## Revendications

1. Groupe de turbines à gaz, constitué essentiellement d'une unité de compresseur constituée d'au moins un compresseur (1), d'au moins un générateur (5), d'au moins une chambre de combustion (2) et d'au moins une turbine (3), les gaz d'échappement (10) provenant de la turbine pouvant être réintroduits pour une utilisation thermique (8) supplémentaire, **caractérisé en ce que** le groupe de turbines à gaz est équipé d'au moins un compresseur de fluide de refroidissement séparé (7), **en ce que** ce compresseur de fluide de refroidissement peut être alimenté en air frais (7a) et en une partie (11) d'un gaz d'échappement de retour, et **en ce que** les fluides comprimés dans le compresseur de fluide de refroidissement peuvent être réintroduits pour le refroidissement de pièces sollicitées thermiquement.

2. Groupe de turbines à gaz selon la revendication 1, **caractérisé en ce qu'**au moins un compresseur de fluide de refroidissement comprend une régulation de débit massique.

3. Groupe de turbines à gaz selon la revendication 2, **caractérisé en ce qu'**une régulation de débit massique d'aspiration d'au moins un compresseur de fluide de refroidissement a lieu soit avec au moins une rangée directrice réglable soit avec une vitesse de rotation réglable ou avec les deux.

4. Groupe de turbines à gaz selon l'une ou plusieurs des revendications 1 à 3, **caractérisé en ce que** le filtrage du fluide de refroidissement est plus fin que celui du fluide qui entre dans le compresseur principal.

5. Groupe de turbines à gaz selon la revendication 4, **caractérisé en ce que** le fluide pénétrant dans le compresseur principal n'est pas filtré.

6. Groupe de turbines à gaz selon la revendication 4, **caractérisé en ce que** le filtre pour le fluide pénétrant dans le compresseur principal présente une chute de pression inférieure à 8 mbar.

7. Groupe de turbines à gaz selon l'une ou plusieurs des revendications 4 à 6, **caractérisé en ce que** les systèmes de refroidissement présentent des canaux ou des trous de films de refroidissement avec un diamètre interne inférieur à 0,6 mm.

8. Groupe de turbines à gaz selon la revendication 1, **caractérisé en ce que**, en aval de l'unité de compresseur, se trouve une première chambre de combustion, **en ce que**, en aval de cette première chambre de combustion, agit une première turbine, **en ce que**, en aval de cette première turbine, se trouve une deuxième chambre de combustion, **en ce que**, en aval de cette deuxième chambre de combustion, agit une deuxième turbine et **en ce que** les turbomachines mentionnées présentent entre elles une liaison fonctionnelle thermodynamique.

9. Groupe de turbines à gaz selon l'une ou plusieurs des revendications 1 à 8, **caractérisé en ce que** ses gaz d'échappement traversent un générateur de vapeur à chaleur perdue.

10. Groupe de turbines à gaz selon les revendications 1 et 9, **caractérisé en ce que** les gaz d'échappement recyclés peuvent être prélevés du côté de la sortie du générateur de vapeur à chaleur perdue.

11. Groupe de turbines à gaz selon la revendication 10, **caractérisé en ce que** les gaz d'échappement recyclés traversent un post-refroidisseur/condensateur disposé en amont des compresseurs.

12. Groupe de turbines à gaz selon l'une ou plusieurs des revendications 1 à 11, **caractérisé en ce que**, dans la conduite de recirculation (16) des gaz d'échappement recyclés, se trouve un ventilateur.

13. Groupe de turbines à gaz selon la revendication 12, **caractérisé en ce que** le ventilateur permet de réguler le taux de recirculation des gaz d'échappement recyclés.

14. Groupe de turbines à gaz selon l'une ou plusieurs des revendications 1 à 13, **caractérisé en ce que**, à partir du compresseur de fluide de refroidissement (7), au moins une conduite de fluide de refroidissement bifurque vers les parties thermiquement sollicitées à refroidir du groupe de turbines à gaz.

15. Groupe de turbines à gaz selon la revendication 1, **caractérisé en ce que** les parties à refroidir de la turbine à gaz font partie de la chambre de combustion et/ou de la turbine.

16. Groupe de turbines à gaz selon la revendication 1, **caractérisé en ce qu'**au moins une conduite de fluide de refroidissement est équipée d'un organe de fermeture.

17. Groupe de turbines à gaz selon la revendication 16, **caractérisé en ce que** l'organe de fermeture est un clapet anti-retour.

18. Groupe de turbines à gaz selon l'une ou plusieurs des revendications 1 à 17, **caractérisé en ce que**, à partir du compresseur de fluide de refroidissement, plusieurs conduites de fluide de refroidissement bifurquent vers les parties thermiquement sollicitées à refroidir du groupe de turbines à gaz.

19. Groupe de turbines à gaz selon la revendication 18, **caractérisé en ce que** les conduites de fluide de refroidissement présentent différentes pressions.

20. Groupe de turbines à gaz selon l'une ou plusieurs des revendications 1 à 19, **caractérisé en ce qu'**au moins un compresseur de fluide de refroidissement (7) comprend au moins un dispositif de refroidissement intermédiaire.

21. Groupe de turbines à gaz selon la revendication 20, **caractérisé en ce que** le débit massique du compresseur de fluide de refroidissement peut être réduit en fonction de sa température de sortie réduite.

22. Groupe de turbines à gaz selon l'une ou plusieurs des revendications 1 à 21, **caractérisé en ce que** le compresseur de fluide de refroidissement est entraîné par un arbre du groupe de turbines à gaz directement ou indirectement par l'intermédiaire d'une transmission.

23. Groupe de turbines à gaz selon la revendication 1, **caractérisé en ce que** le compresseur de fluide de refroidissement est entraîné par un moteur électrique en liaison fonctionnelle avec le générateur du groupe de turbines à gaz de façon à ce que l'alimentation électrique soit maintenue même lors d'une défaillance du branchement au secteur.

24. Groupe de turbines à gaz selon les revendications 1 et 11, **caractérisé en ce que**, en aval du post-refroidisseur et en amont du compresseur de fluide de refroidissement, une partie des gaz d'échappement recyclés bifurque vers le compresseur principal.

25. Groupe de turbines à gaz selon l'une ou plusieurs des revendications 1 à 24, **caractérisé en ce que** plusieurs compresseurs de fluide de refroidissement sont prévus, qui peuvent être utilisés en série ou en parallèle.

26. Groupe de turbines à gaz selon la revendication 8, **caractérisé en ce que** la deuxième chambre de combustion peut être utilisée en tant que chambre de combustion à allumage automatique.

27. Groupe de turbines à gaz selon la revendication 8, **caractérisé en ce que** les turbomachines sont disposées sur un arbre de rotor commun.

28. Groupe de turbines à gaz selon l'une ou plusieurs des revendications 1 à 27, **caractérisé en ce que** l'unité de compresseur et/ou le compresseur de fluide de refroidissement peuvent être utilisés en mode High-Fogging.

29. Groupe de turbines à gaz selon la revendication 28, **caractérisé en ce que** le mode High-Fogging peut être mise en oeuvre avec une quantité d'eau d'au moins 0,5 % de la quantité aspirée.

30. Procédé d'utilisation d'un groupe de turbines à gaz selon l'une ou plusieurs des revendications 1 à 29, **caractérisé en ce que** toutes ou certaines parties, qui sont exposées aux gaz chauds en aval de la chambre de combustion, sont traitées par pré-oxydation lors de la fabrication.

31. Procédé d'utilisation d'un groupe de turbines à gaz selon l'une ou plusieurs des revendications 1 à 30, **caractérisé en ce que** la recirculation est interrompue périodiquement par des phases avec de l'air frais, qui régénèrent les couches d'oxydes des parties chaudes.

32. Procédé d'utilisation d'un groupe de turbines à gaz selon l'une ou plusieurs des revendications 1 à 31, **caractérisé en ce qu'**une partie des fluides de refroidissement sont prélevés dans le compresseur principal, de façon à ce qu'un fonctionnement en charge partielle du groupe de turbines à gaz soit maintenu même lors d'une défaillance du compresseur de fluide de refroidissement.

33. Procédé d'utilisation d'un groupe de turbines à gaz selon l'une ou plusieurs des revendications 1 à 32, **caractérisé en ce que** la chaleur évacuée est introduite, par au moins un refroidisseur intermédiaire du ou des compresseurs de fluide de refroidissement, dans le Bottoming Cycle.

34. Procédé d'utilisation d'un groupe de turbines à gaz selon l'une ou plusieurs des revendications 1 à 33, **caractérisé en ce que**, en cas de défaillance d'un compresseur de fluide de refroidissement, une injection d'un produit de refroidissement de remplacement est automatiquement effectuée, le compresseur défectueux étant séparé par un clapet anti-retour.

35. Procédé d'utilisation d'un groupe de turbines à gaz selon l'une ou plusieurs des revendications 1 à 34, **caractérisé en ce que** le compresseur de fluide de refroidissement est conçu avec des tensions de flexion dues aux gaz au niveau des pales nettement plus faibles que le compresseur principal.

36. Procédé d'utilisation d'un groupe de turbines à gaz selon l'une ou plusieurs des revendications 1 à 35, **caractérisé en ce que** les compresseurs de fluide de refroidissement sont régulés de façon à ce que les parties refroidies avec le fluide de refroidissement sont maintenues, dans de larges zones de charge, à une température de métal presque constante, et **en ce que**, plus particulièrement, lors d'une fermeture rapide de la machine principale, un refroidissement brusque est évité.

37. Procédé d'utilisation d'un groupe de turbines à gaz selon l'une ou plusieurs des revendications 1 à 35, **caractérisé en ce que** la part du débit massique du compresseur de fluide de refroidissement est supérieure à ce qui est nécessaire pour le refroidissement et **en ce que** la part de fluide de refroidissement qui n'est pas nécessaire pour le refroidissement s'écoule entre la chambre de combustion et les turbines dans la processus principal.

38. Procédé d'utilisation d'un groupe de turbines à gaz selon l'une ou plusieurs des revendications 1 à 37, **caractérisé en ce qu'**au moins une chambre de combustion est utilisée de manière presque stoechiométrique avec un carburant présentant un pouvoir calorifique faible.
